# FASCICULE DE BREVET EUROPEEN

(11) **EP 1 391 692 B1**
(45) Date de publication et mention de la délivrance du brevet: **04.05.2011**
(21) Numéro de dépôt: 03292009.2
(22) Date de dépôt: 11.08.2003
(51) Int. Cl.: G01C 15/00

(54) **Un système de surveillance des mouvements de parties d'ouvrage**
System zum Überwachen von Bauwerksabschnittsbewegungen
System for monitoring movements of building parts

(30) Priorité: 23.08.2002 FR 0210521
(43) Date de publication de la demande: 25.02.2004
(73) Titulaire: Soldata, 92000 Nanterre (FR)
(72) Inventeur: Labat, Marie-Laure c/o Soldata Parc de l'ile, 92000 Nanterre (FR); Gastine, Eric c/o Soldata Parc de l'ile, 92000 Nanterre (FR); Beth, Martin c/o Soldata Parc de l'ile, 92000 Nanterre (FR)
(74) Mandataire: Balesta, Pierre

(56) Documents cités:
- US-A- 4 889 997
- United States Army Corps of Engineers Engineer Manual EM 1110-2-1009, "Engineering and Design - Structural Deformation Surveying", 1 Juin 2002 XP002241245

## Description

La présente invention a pour objet un système de surveillance des mouvements éventuels de parties d'ouvrage.

De façon plus précise, la présente invention concerne un système ou une installation qui permet la surveillance des éventuels mouvements des différents éléments constitutifs d'un ouvrage d'art sous l'effet de causes externes telles que des mouvements de terrain ou des risques d'affaissement dus par exemple au perçage de tunnel sous ledit ouvrage d'art.

L'invention s'applique notamment mais non exclusivement à la surveillance de bâtiments dans une zone urbaine lors du perçage d'un tunnel sous ces bâtiments. On comprend en effet que ce perçage peut entraîner des mouvements de la structure de ces bâtiments et qu'il est indispensable d'en être informé immédiatement afin de pouvoir y remédier.

On connaît des systèmes de surveillance des mouvements éventuels de parties d'ouvrage d'art qui sont constitués par un ensemble formé d'une part par un théodolite motorisé et d'autre part par des cibles associées au théodolite, ces cibles étant d'une part positionnées sur des parties non susceptibles d'être affectées par des mouvements, c'est-à-dire des cibles de référence et, d'autre part, des cibles de surveillance qui sont fixées à des endroits convenables sur les parties d'ouvrage à surveiller. La position des cibles de référence peut être connue avec une grande précision. Le théodolite ou appareil similaire permet, en visant successivement les cibles de référence et les cibles de surveillance, de déterminer les coordonnées dans l'espace des cibles de référence et des cibles de surveillance. On comprend en effet que, du fait que le plus souvent le théodolite doit être placé dans la zone susceptible d'être affectée par des mouvements, il est nécessaire de pouvoir déterminer précisément, à partir des cibles de référence, la position du théodolite et en conséquence la position des cibles de surveillance.

Comme cela est bien connu, notamment par l'article R. Wilkins et al. : « A Précise, Reliable, and Fully Automatic Real Time Monitoring System for Steep Embankments », (CIM 2002, Vancouver) qui décrit un tel système de surveillance, le théodolite est commandé pour viser successivement et périodiquement les cibles de référence et les cibles de surveillance en mesurant pour chaque cible ses coordonnées polaires : distance, angle horizontal, angle vertical. Le plus souvent, le théodolite est équipé d'un générateur de faisceau laser et les cibles de référence et de surveillance comportent un prisme qui renvoie le faisceau laser vers le théodolite lorsque celui-ci est pointé correctement sur la cible. Il est ainsi possible de mesurer les coordonnées polaires des cibles de référence et des cibles de surveillance par rapport au théodolite, les coordonnées cartésiennes des cibles de surveillance étant calculées par le centre de surveillance.

En comparant les coordonnées des cibles de surveillance pour des instants successifs de mesure de coordonnées, on peut détecter des éventuels mouvements même si ceux-ci sont de très faible amplitude. En effet, pour disposer d'un système de surveillance fiable, il est nécessaire de pouvoir détecter des déplacements ou mouvements de l'ordre du millimètre.

Bien que les théodolites puissent avoir une portée relativement importante, il arrive, dans certaines situations, que les possibilités d'implantation du théodolite ne permettent pas, à l'aide d'un seul théodolite, d'effectuer la surveillance de l'ensemble de l'ouvrage ou de l'ensemble des bâtiments. Cela est particulièrement vrai en zone urbaine.

En outre, il n'est pas toujours possible, dans l'environnement de la zone de surveillance et notamment dans le cas d'un environnement urbain, de disposer de zones non susceptibles d'être affectées par des mouvements qui permettent la mise en place de cibles de référence de telle manière que ces cibles permettent la détermination dans les trois dimensions de la position du théodolite.

Il existe donc un réel besoin de disposer d'un système de surveillance des mouvements éventuels de parties d'ouvrage qui permette de surveiller efficacement les différentes parties d'un ouvrage d'art de dimensions importantes et dans des conditions difficiles d'implantation des cibles de surveillance ou de référence et notamment en milieu urbain.

Un objet de la présente invention est de fournir un système de surveillance des mouvements éventuels de parties d'ouvrage d'art qui permettent la surveillance d'un ouvrage d'art de dimensions importantes même si les conditions, par exemple en milieu urbain, sont défavorables à la mise en place des théodolites et des cibles de référence ou de surveillance.

Pour atteindre ce but, selon l'invention, le système de surveillance des mouvements éventuels de parties d'ouvrage comprend les caractéristiques de la revendication 1.

On comprend que le système de surveillance, selon l'invention, comprend une pluralité de stations de prise de mesure, par exemple de théodolites motorisés, qui peuvent donc être disposées de façon convenable pour permettre la surveillance de l'ensemble de l'ouvrage d'art. Cependant, du fait que, aux différentes stations de prise de mesure est toujours associée au moins une cible de surveillance correspondant à au moins deux stations de prise de mesure, il est possible de coupler, lors du traitement mathématique des coordonnées mesurées des cibles de surveillance et des cibles de référence, les informations relatives à la position de l'ensemble de ces cibles. On peut s'affranchir ainsi des situations dans lesquelles il ne serait pas possible de mettre en place un nombre suffisant de cibles de référence associées à chaque station de prise de mesure. En d'autres termes, les stations de prise de mesure sont couplées entre elles par l'intermédiaire des cibles de surveillance communes à deux ou plus de deux stations de prise de mesure.

D'un point de vue pratique, pour qu'une cible de surveillance puisse être "vue" par deux stations de prise de mesure, il peut être nécessaire que cette cible soit double. Par exemple, la cible comportera deux prismes dont les positions relatives sont strictement fixes.

Dans le présent texte, par "cible de surveillance", il faut donc entendre soit une cible simple soit une cible double.

En outre, il faut préciser que les cibles de référence ne sont pas nécessairement strictement fixes. Il suffit que leur position précise puisse être déterminée et recalée de temps en temps.

Selon un mode préféré de mise en oeuvre, le système de surveillance comprend en outre :
- un centre de surveillance comprenant lesdits moyens de traitement ; et
- des moyens pour transmettre depuis chaque station vers ledit centre de surveillance lesdites coordonnées polaires des cibles de surveillance et de référence mesurées par lesdites stations auxdits instants successifs.

On comprend que, dans ce mode de réalisation préféré, le système de surveillance comprend en outre un centre de surveillance qui est relié par tout moyen convenable, par exemple par transmission radio, aux différentes stations de prise de mesure de telle manière que ce centre de surveillance reçoive, à des instants successifs prédéterminés, les coordonnées relatives des cibles de référence et des cibles de surveillance mesurées par les différentes stations de prise de mesure. Ce centre de surveillance comporte les moyens de traitement mathématique des différentes informations reçues, ce qui permet au fur et à mesure de la réception de l'ensemble des mesures effectuées par les différentes stations de prise de mesure à chaque instant de corréler, par exemple par la méthode des moindres carrés, les mesures effectuées afin d'optimiser la détermination des coordonnées absolues des cibles de surveillance du fait de la redondance des informations. Le calcul des coordonnées effectives absolues des différentes cibles de surveillance permet de détecter en temps réel un éventuel mouvement d'une partie de l'ouvrage d'art associé à une des cibles de surveillance.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées, sur lesquelles :
- la figure 1 est une vue simplifiée d'un exemple de réalisation d'une station de prise de mesure ;
- la figure 2 est un schéma montrant l'implantation de cibles de référence et de cibles de surveillance autour d'une station de prise de mesure ;
- la figure 3 illustre l'ensemble du système de surveillance dans une première configuration ;
- la figure 4 est une vue schématique de la cible double utilisée pour les cibles de surveillance communes à deux stations de prise de mesure ; et
- la figure 5 montre un deuxième exemple de mise en oeuvre.

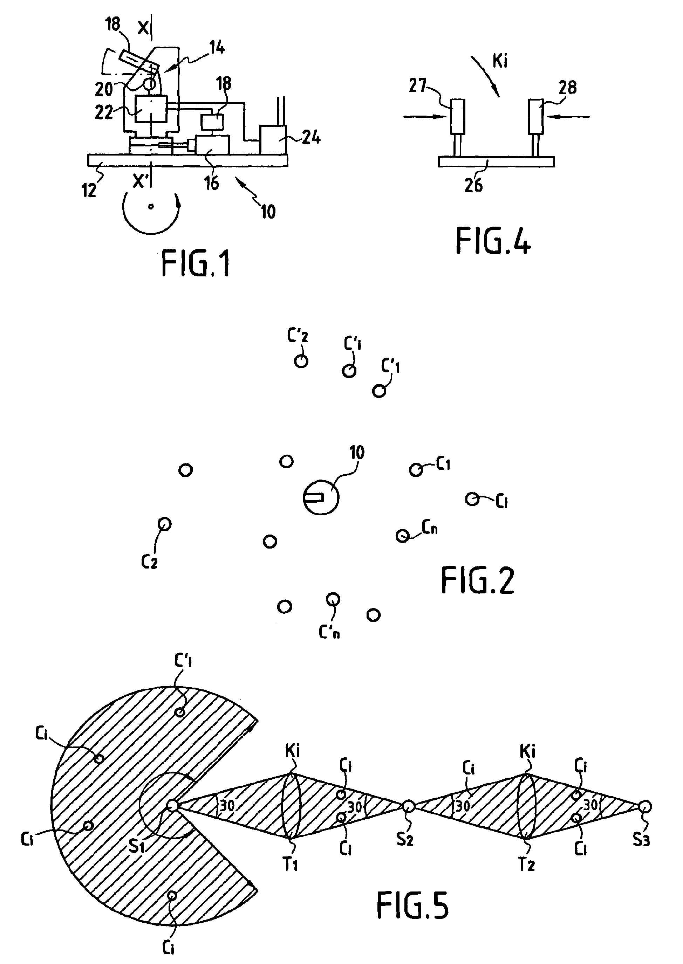

En se référant tout d'abord à la figure 1, on va décrire un exemple de réalisation d'une station de prise de mesure bâtie autour d'un théodolite motorisé. Il va cependant de soi que l'invention pourrait être mise en oeuvre avec d'autres stations de prise de mesure dès lors que celles-ci permettent de déterminer les coordonnées polaires relatives des différentes cibles de référence ou de surveillance correspondant à la station de prise de mesure.

La station 10 comporte un socle ou châssis 12 qui peut être fixé à un endroit convenable sur l'ouvrage pour effectuer la surveillance. Sur ce châssis 12 est monté un théodolite 14 mobile en rotation autour de l'axe vertical XX'. La rotation du théodolite 14 par rapport au châssis 12 peut être commandée par un moteur 16 associé à un circuit de commande 18. Le théodolite 14 comprend notamment une optique d'émission d'un faisceau laser 18 qui est mobile autour d'un axe horizontal coupant l'axe vertical XX'. Le faisceau laser émis par l'optique 18 permet de viser les cibles en commandant convenablement le moteur 18 et un actionneur 20 de rotation de l'optique autour de l'axe horizontal. Ce système peut être asservi et programmé pour viser successivement différentes cibles à des instants prédéterminés. Dans la station, on trouve également des circuits de traitement et de mémoire tels que 22 qui permettent pour chaque visée d'une cible de stocker temporairement l'identification de la cible de référence ou de surveillance ainsi que les coordonnées polaires de cette cible par rapport au théodolite. La station de prise de mesure 10 comporte également un émetteur radio 24, ou des moyens de transmission analogues, capable d'émettre, à chaque prise de mesure des coordonnées des cibles associées à la station, l'identification de chaque cible ainsi que ses coordonnées polaires relatives.

Sur la figure 2, on a représenté un exemple d'implantation de cibles de surveillance Cᵢ et de cibles de référence C'ᵢ autour d'une station 10. Les cibles de surveillance Cᵢ sont fixées sur les différentes parties de l'ouvrage susceptible de subir des mouvements. En revanche, les cibles de référence C'ᵢ, sont disposées et fixées sur des parties de l'environnement de l'ouvrage non susceptibles a priori d'être affectées par des mouvements. En outre, par tout moyen convenable, la position absolue des cibles de référence C'ᵢ est connue avec une grande précision. La position des cibles de référence n'est pas nécessairement strictement fixe bien que les cibles soient montées dans des liens hors de la zone affectée par les mouvements. Il suffit que la position exacte de ces cibles puisse être recalée périodiquement. Il est nécessaire que les cibles de référence C'ᵢ soient disposées de telle manière qu'elles permettent un repérage absolu dans les trois dimensions de la station de prise de mesure 10. Les cibles de surveillance Cᵢ doivent bien sûr être disposées dans le champ d'action efficace du théodolite et notamment donc en vision directe par rapport à la station.

On comprend que les conditions imposées pour les cibles de référence et les cibles de surveillance font qu'il est impossible de surveiller un ouvrage important à l'aide d'une seule station de prise de mesure.

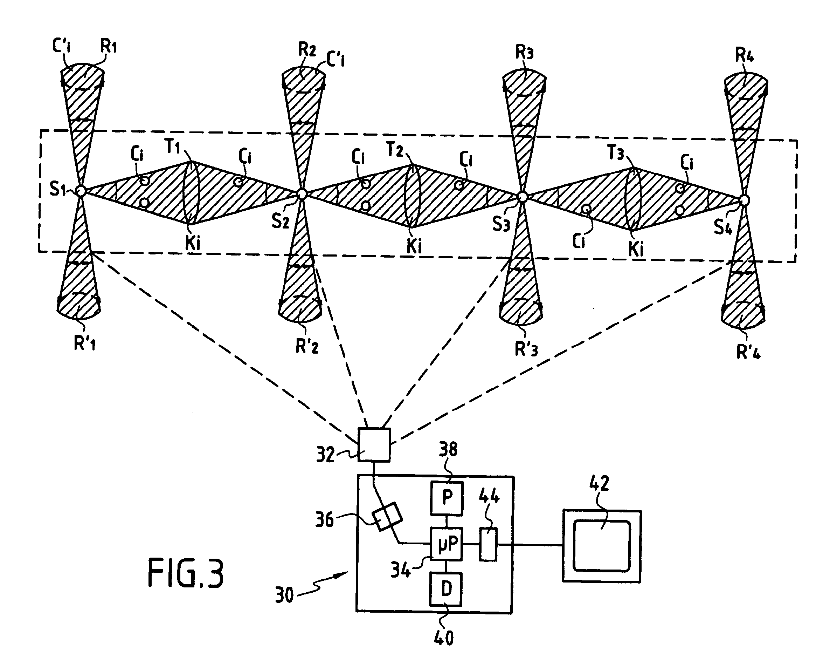

En se référant maintenant à la figure 3, on va décrire l'ensemble du système de surveillance conforme à l'invention dans une première configuration. On a représenté en pointillés la zone H de l'ouvrage d'art dont il est nécessaire de surveiller et de détecter les éventuels mouvements. Il s'agit par exemple d'une rue dans un environnement urbain sous laquelle on fore un tunnel.

Sur cette figure, on a représenté de façon simplifiée plusieurs stations de prise de mesure S₁, S₂, S₃, S₄. Ces stations de prise de mesure sont fixées en des emplacements qui sont susceptibles d'être affectés par des mouvements afin de pouvoir effectivement viser des cibles de surveillance. Sur la figure 3, on a également représenté des zones R₁, R'₁ associées à la station S₁ dans lesquelles sont disposées des cibles de référence C'ᵢ. De la même manière, des cibles de référence associées à la station S₂ sont disposées dans les zones R₂ et R'₂, des cibles de référence associées à la station S₃ sont disposées dans les zones R₃ et R'₃ et à la station S₄ sont associées des cibles de référence disposées dans les zones R₄ et R'₄.

A chaque station de prise de mesure Sᵢ sont également associées des cibles de surveillance Cᵢ qui sont fixées sur des parties de l'ouvrage à surveiller susceptibles d'être affectées par des mouvements, ces cibles Cᵢ étant bien sûr disposées dans le champ de visée des théodolites des stations considérées. Il est prévu des cibles de surveillance particulières Kᵢ qui sont disposées dans des zones T₁, T₂ T₃ qui sont situées dans le champ de visée de deux stations de prise de mesure adjacentes. Chaque zone T₁, T₂ T₃ comporte plusieurs cibles doubles Kᵢ. On comprend que chaque cible du type Kᵢ fait l'objet de la prise de coordonnées relatives par deux stations adjacentes, ce qui permet de réaliser un couplage entre les prises de coordonnées de l'ensemble des cibles de référence et de surveillance associées aux deux stations de prise de mesure, et donc à l'ensemble des stations de prise de mesure.

Comme il est souhaitable que les cibles soient disposées sensiblement perpendiculairement au faisceau laser de la station qui leur est associée, les cibles du type Kᵢ ont une structure particulière représentée sur la figure 4. Ces cibles en fait sont doubles. Elles comportent une embase 26 rigide sur laquelle sont montées deux cibles de type standard 27 et 28. Les cibles de surveillance 27 et 28 peuvent être orientées convenablement par rapport aux deux théodolites des stations qui mesureront leurs coordonnées. Cependant, les coordonnées relatives des cibles 27 et 28 sont fixes et notamment la distance qui sépare ces deux cibles est fixe. Dans le calcul des coordonnées absolues des cibles de surveillance, cette particularité sera bien sûr intégrée.

Par cible de surveillance il faut donc entendre des cibles simples, doubles ou même éventuellement triples.

Le système de surveillance comprend, outre les stations de prise de mesure et les cibles de référence ou de surveillance, qu'elles soient simples ou doubles, un centre de surveillance 30. Ce centre de surveillance 30 est équipé par exemple de moyens récepteurs radio 32 pour recevoir les coordonnées relatives mesurées par les différentes stations et transmises par l'émetteur radio 24 qui leur est associé. Cette transmission d'informations de toutes les stations Sᵢ vers le centre 30 est réalisée à chaque période de prise de mesure par les stations. Le centre 30 comporte notamment des moyens de traitement logique et numérique 34, par exemple un microprocesseur, reliés au récepteur radio 32 par des circuits de stockage et de mise en forme 36, des mémoires permanentes de programme 38, des mémoires vives de calcul et des mémoires non volatiles 40 de données. Le centre de surveillance comporte également des moyens d'affichage 42 permettant, par exemple, d'afficher pour chaque instant de mesure les coordonnées absolues calculées des différentes cibles de surveillance avec indication de la cible considérée. Comme on l'expliquera ultérieurement, les moyens d'affichage permettent d'afficher un signal d'alarme dans le cas où on détecte un mouvement d'une des cibles de surveillance qui dépasse un seuil prédéterminé. Les moyens d'affichage 42 sont reliés à l'unité de traitement logique 34 par un circuit de commande 44.

Le fonctionnement de l'ensemble du système est le suivant :
à chaque instant de mesure, les théodolites des stations de prise de mesure sont commandés pour relever les coordonnées polaires relatives des cibles de référence, des cibles de surveillance simples et des cibles de surveillance doubles qui leur sont associées. Ces informations de coordonnées sont transmises à chaque période de mesure vers le centre de surveillance 30. Ces différentes coordonnées relatives prises par les théodolites sont traitées par l'unité de traitement logique 34 qui met en oeuvre un algorithme mathématique de traitement stocké dans la mémoire permanente 38. Comme on l'expliquera plus en détail ultérieurement, l'algorithme est du type à moindres carrés. Pour chaque série de mesure de coordonnées relatives, on obtient, par traitement à l'aide du programme, les coordonnées absolues des différentes cibles de surveillance qu'elles soient simples ou doubles, ces coordonnées absolues résultant notamment de la corrélation entre les mesures faites par les stations en raison des cibles doubles Kᵢ. Ces coordonnées absolues des cibles de surveillance sont stockées dans la mémoire 40 et peuvent être affichées sur le dispositif d'affichage 42. Lors du cycle de mesure suivant, le même processus se déroule, ce qui permet d'obtenir les coordonnées absolues des différentes cibles de surveillance. La comparaison avec un état de référence de ces coordonnées absolues des différentes cibles de surveillance obtenues à chaque cycle de mesure permet de détecter en temps réel un éventuel mouvement d'une des cibles de surveillance et donc de déclencher une alerte. La périodicité des mesures est déterminée en fonction de la réactivité recherchée dans la surveillance.

Il est également important de souligner que l'invention permet un traitement global des différentes stations de prise de mesure et donc de l'ensemble de l'installation.

L'implantation des cibles tant de référence que de surveillance illustrée sur la figure 3 correspond à une configuration favorable du fait que, à chaque station de prise de mesure, il est possible d'associer des cibles de référence fixes. L'implantation représentée sur la figure 3 correspond par exemple à la surveillance des bâtiments le long d'une rue principale, les cibles de référence étant montées sur des bâtiments dans des voies perpendiculaires hors de la zone susceptible d'être affectée par les mouvements.

Comme on l'a déjà indiqué, le traitement mathématique des coordonnées polaires relatives de surveillances "mobiles" et des cibles de référence fixes à partir des stations de prise de mesure également "mobiles", qui sont redondantes, est réalisé par la méthode des moindres carrés.

Cette méthode bien connue en elle-même et utilisée dans de nombreux domaines permet de gérer des informations, en nombre redondant, acquises avec des risques d'erreur. Elle permet du fait de la redondance des informations, de détecter les erreurs et d'améliorer la précision des résultats obtenus.

Le calcul est itératif : un premier calcul permet d'établir un ensemble de solutions ajusté à partir d'un ensemble de solutions approché établi à partir d'éléments externes. L'ensemble des solutions ajusté est ensuite utilisé comme ensemble de valeurs approché et ainsi de suite jusqu'à ce que le facteur de convergence converge selon une précision fixée à l'avance. L'ensemble des solutions retenues est celui qui minimise la somme des carrés des résidus correspondant à chaque coordonnée.

Lors de ce traitement mathématique, il est possible de détecter automatiquement si certaines cibles présentent régulièrement un résidu plus important que les autres cibles. Ces écarts sont généralement imputables à des artefacts affectant le relèvement de la position de ces cibles, ces artefacts pouvant être des réflexions parasites des faisceaux laser, des perturbations du chemin optique des faisceaux laser, etc.

Il est ainsi possible d'identifier automatiquement les cibles correspondant à des résidus plus importants par un traitement mathématique de ces résidus. Ces cibles sont alors désactivées et le traitement mathématique repris sans tenir compte des mesures faisant intervenir ces cibles. Ainsi, on comprend que la configuration du réseau de stations peut être gérée de façon dynamique.

Les cibles de référence ont des coordonnées absolues connues avec précision alors que les cibles de surveillance et les stations de prise de mesure sont "mobiles". La position des stations est recalculée à chaque fois à partir des cibles de référence.

Le grand avantage de l'utilisation de la méthode des moindres carrés dans le cadre de la présente invention est de pouvoir traiter des calculs en bloc. Elle permet de calculer des théodolites qui ne voient pas ou peu de cibles de référence en les rattachant à d'autres théodolites par des cibles de surveillance doubles Ki.

Dans certains cas, on ne peut bénéficier de cette situation favorable. Ce sera le cas, par exemple, lorsqu'il ne sera pas possible d'associer à chaque station de prise de mesure des cibles fixes de référence en nombre suffisant. C'est le cas illustré par la figure 5. Sur cette figure, on a représenté une première station de prise de mesure S₁ à laquelle sont associées une pluralité de cibles fixes de référence C'ᵢ et des cibles de surveillance Cᵢ disposées dans la zone U de visée du théodolite de la station S₁. En revanche, pour les stations de prise de mesure S₂ et S₃, on ne dispose pas de la possibilité d'implanter des cibles de référence. A chacune des stations S₂ et S₃, sont associées bien entendu des cibles de surveillance Cᵢ. En outre, dans les zones communes à deux stations de prise de mesure adjacentes T₁ et T₂ sont fixées des cibles doubles Kᵢ. En particulier, dans la zone T₁ sont montées des cibles de surveillance doubles dans les champs d'action de la station S₁ et de la station S₂ alors que des cibles doubles sont montées dans la zone T₂ commune aux stations S₂ et S₃. Le reste du système de surveillance est identique à celui qui est représenté sur la figure 3, en particulier en ce qui concerne le centre de surveillance.

On comprend que dans cette configuration et malgré l'absence de cibles de référence pour les stations S₂ et S₃, il sera possible d'effectuer cette surveillance et donc la détermination des coordonnées absolues des cibles de surveillance Cᵢ dans les zones correspondant aux stations S₂ et S₃ grâce à la corrélation entre les mesures résultant de la mise en place des cibles doubles Kᵢ dans les zones communes à deux stations de mesure T₁ et T₂. Il faut bien sûr que les cibles doubles Kᵢ soient en nombre suffisant.

Il faut souligner que, grâce à la présence d'au moins une cible double de surveillance, visible par deux stations de prise de mesure, le système peut fonctionner dans le cas où une station de prise de mesure n'est pas reliée à des cibles de référence en nombre suffisant ou qu'elle est reliée à des cibles de référence mal reparties.

En outre, comme on l'a indiqué précédemment par un traitement mathématique des résidus associé aux cibles, lors de la mise en oeuvre de la méthode des moindres carrés, il est possible d'identifier les cibles dont le relèvement de la position est affecté d'artefacts et de ne pas tenir compte des mesures faisant intervenir les cibles ainsi identifiées pour calculer les coordonnées polaires des autres cibles. On peut ainsi réaliser une gestion dynamique du système de surveillance.

## Revendications

1. Système de surveillance des mouvements éventuels de parties d'ouvrage, ledit système comprenant :
- une pluralité de stations de prise de mesure aptes à viser des cibles et susceptibles d'être montées au moins en partie sur lesdites parties d'ouvrage;
- une pluralité de cibles de référence accouplées à au moins une station de prise de mesure ;
- une pluralité de cibles de surveillance montées sur lesdites parties d'ouvrage, au moins une desdites cibles de surveillance étant associée à au moins deux stations ;
- des moyens de commande de chaque station pour mesurer à des instants successifs les coordonnées des cibles de référence et des cibles de surveillance qui lui sont associées par rapport à ladite station ; et
- des moyens de traitement des coordonnées des cibles de référence et des cibles de surveillance élaborées par lesdites stations auxdits instants successifs pour en déduire un éventuel déplacement d'une cible de surveillance entre deux instants de mesure, **caractérisé en ce qu'**au moins une desdites stations de prise de mesure est associée à aucune cible de référence.

2. Système de surveillance selon la revendication 1, **caractérisé en ce que** ladite ou lesdites stations de prise de mesure associée(s) à aucune cible de référence (sont) associée(s) à au moins une, de préférence plusieurs, cible de surveillance, ladite cible de surveillance étant également associée à une autre station de prise de mesure.

3. Système de surveillance selon la revendication 1 ou 2, **caractérisé en ce que** les cibles de référence ont des coordonnées absolues connues avec précision alors que les cibles de surveillance et les stations de prise de mesure sont montées sur des parties d'ouvrage susceptibles de subir un déplacement.

4. Système de surveillance selon l'une quelconque des revendications 1 à 3, **caractérisé en ce qu'**il comprend en outre :
- un centre de surveillance comprenant lesdits moyens de traitement ; et
- des moyens pour transmettre depuis chaque station de mesure vers ledit centre de surveillance lesdites coordonnées des cibles de surveillance et de référence mesurées par lesdites stations auxdits instants successifs.

5. Système de surveillance selon la revendication 4, **caractérisé en ce que** lesdits moyens de traitement comprennent des moyens pour appliquer, pour chaque instant de mesure, un algorithme mathématique à l'ensemble des coordonnées mesurées des cibles de référence et des cibles de surveillance mesurées par l'ensemble desdites stations.

6. Système de surveillance selon la revendication 5, **caractérisé en ce que** ledit algorithme mathématique est une méthode des moindres carrés pour calculer pour chaque instant de mesure la position absolue dans l'espace desdites cibles de surveillance, et **en ce que** lesdits moyens de traitement comprennent en outre des moyens pour comparer la position absolue de chaque cible de surveillance aux instants successifs de mesure.

7. Système de surveillance selon l'une quelconque des revendications 1 à 6, **caractérisé en ce qu'**au moins l'une des cibles de surveillance associées à deux stations est constituée par deux éléments de cible montés sur une partie d'ouvrage de telle manière que leur distance mutuelle soit fixe, une des deux stations mesurant les coordonnées d'un des éléments de cible de surveillance, l'autre station mesurant les coordonnées de l'autre élément de cible de surveillance.

8. Système de surveillance selon l'une quelconque des revendications 1 à 7, **caractérisé en ce que** lesdites coordonnées sont des coordonnées polaires.

9. Système de surveillance selon l'une quelconque des revendications 1 à 8, **caractérisé en ce que** lesdits moyens de traitement comprennent en outre des moyens pour identifier les éventuelles cibles de référence ou les éventuelles cibles de surveillance correspondant à des résidus obtenus par la méthode des moindres carrés supérieurs à ceux des autres cibles, et des moyens pour ne pas prendre en considération les mesures faisant intervenir lesdites cibles identifiées.

10. Procédé de surveillance en temps réel des mouvements éventuels de parties d'ouvrage dans lequel :
- on fournit un système de surveillance selon l'une quelconque des revendications 1 à 9, procédé dans lequel :
- à chaque instant de mesure, les stations de mesure sont commandées pour mesurer les coordonnées polaires relatives des cibles de référence et des cibles de surveillance qui leur sont associées;
- on réalise une étape de calcul, à partir de l'ensemble des mesures obtenues, de préférence par un algorithme du type à moindres carrés, pour obtenir les coordonnées absolues des différentes cibles de surveillance ;
- on compare les coordonnées absolues obtenues avec un état de référence afin de détecter un éventuel mouvement d'une des cibles de surveillance ; et
- on déclenche une alerte si un mouvement est détecté.

11. Unité de traitement comportant un programme destiné à la mise en oeuvre du procédé de surveillance selon la revendication 10.

## Claims

1. A monitoring system for monitoring the movements, if any, of structure portions, the system comprising:
• a plurality of measurement-taking stations able to sight targets and capable of being mounted at least in part on said structure portions;
• a plurality of reference targets linked to at least one measurement-taking station;
• a plurality of monitoring targets mounted on said structure portions, at least one of said monitoring targets being associated with at least two stations;
• control means for controlling each station to measure at successive instants the coordinates of the reference targets and of the monitoring targets that are associated therewith, relative to said station; and
• processor means for processing the coordinates of the reference targets and of the mounting targets as generated by said stations at said successive instants so as to deduce therefrom any displacement of a monitoring target between two measurement instants, the system being **characterized in that** at least one of said measurement-taking stations is associated with no reference target.

2. A monitoring system according to claim 1, **characterized in that** said measurement-taking station(s) associated with no reference target is/are associated with at least one monitoring target, preferably more, said monitoring target also being associated with another measurement-taking station.

3. A monitoring system according to claim 1 or claim 2, **characterized in that** the reference targets have absolute coordinates that are known accurately, whereas the monitoring targets and the measurement-taking stations are mounted on structure portions that are liable to be subjected to displacement.

4. A monitoring system according to any one of claims 1 to 3, **characterized in that** it further comprises:
• a monitoring center comprising said processor means; and
• means for transmitting from each measurement station to said monitoring center said coordinates of monitoring targets and of reference targets as measured by said stations at said successive instants.

5. A monitoring system according to claim 4, **characterized in that** said processor means include means for applying, at each measurement instant, a mathematical algorithm to all of the measured coordinates of the reference targets and of the monitoring targets as measured by all of said stations.

6. A monitoring system according to claim 5, **characterized in that** said mathematical algorithm is a least squares method for calculating at each measurement instant the absolute position in three dimensions of said monitoring targets, and **in that** said processor means further comprise means for comparing the absolute positions of each monitoring target at the successive measurement instants.

7. A monitoring system according to any one of claims 1 to 6, **characterized in that** at least one of the monitoring targets associated with two stations is constituted by two target elements mounted on a structure portion in such a manner that their mutual distance is fixed, one of the two stations measuring the coordinates of one of the monitoring target elements and the other station measuring the coordinates of the other monitoring target elements.

8. A monitoring system according to any one of claims 1 to 7, **characterized in that** said coordinates are polar coordinates.

9. A monitoring system according to any one of claims 1 to 8, **characterized in that** said processor means further include means for identifying those reference targets, if any, or those monitoring targets, if any, that correspond to residuals obtained by the least squares method that are greater than those of the other targets, and means for ignoring the measurement involving said identified targets.

10. A method of monitoring in real time the movements, if any, of structure portions, wherein:
• a monitoring system according to any one of claims 1 to 9 is provided, and the method comprises:
• at each measurement instant, controlling the measurement stations to measure the relative polar coordinates of the reference targets and of the monitoring targets associated therewith;
• performing a calculation step on the basis of all of the measurements obtained, preferably by an algorithm of the least squares type, to obtain the absolute coordinates of the various monitoring targets;
• comparing the absolute coordinates obtained with a reference list in order to detect a movement, if any, of any of the monitoring targets; and
• triggering a warning if a movement is detected.

11. A processor unit including a program for implementing the monitoring method according to claim 10.

## Patentansprüche

1. System zur Überwachung eventueller Bewegungen von Bauwerksteilen, wobei das System umfaßt:
- eine Vielzahl von Meßstationen, die geeignet sind, Ziele anzuvisieren und die wenigstens teilweise an den genannten Teilen angebracht werden können,
- eine Vielzahl von Referenzzielen, die mit wenigstens einer Meßstation gekoppelt sind,
- eine Vielzahl von Überwachungszielen, die an den Bauwerksteilen angebracht sind, wobei wenigstens eines der Überwachungsziele wenigstens zwei Stationen zugeordnet ist,
- Mittel zum Steuern einer jeden Station, um die Koordinaten der Referenzziele und der Überwachungsziele, die ihr - bezogen auf die genannte Station - zugeordnet sind, zu aufeinanderfolgenden Zeitpunkten zu messen, sowie
- Mittel zum Verarbeiten der zu den aufeinanderfolgenden Zeitpunkten durch die Stationen erstellten Koordinaten der Referenzziele und der Überwachungsziele, um hieraus eine eventuelle Bewegung eines Überwachungsziels zwischen zwei Meßzeitpunkten abzuleiten, **dadurch gekennzeichnet, daß** wenigstens eine der Meßstationen keinem Referenzziel zugeordnet ist.

2. Überwachungssystem nach Anspruch 1, **dadurch gekennzeichnet, daß** die Meßstation(en), die keinem Referenzziel zugeordnet ist (sind), einem, vorzugsweise mehreren Überwachungsziel(en) zugeordnet ist (sind), wobei das Überwachungsziel auch einer weiteren Meßstation zugeordnet ist.

3. Überwachungssystem nach Anspruch 1 oder 2, **dadurch gekennzeichnet, daß** die Referenzziele genau bekannte absolute Koordinaten haben, während die Überwachungsziele und die Meßstationen an Bauwerkteilen angebracht sind, die in Bewegung geraten können.

4. Überwachungssystem nach einem der Ansprüche 1 bis 3, **dadurch gekennzeichnet, daß** es außerdem folgendes aufweist:
- ein die Verarbeitungsmittel umfassendes Überwachungszentrum, und
- Mittel, um von jeder Meßstation die von den Stationen zu den aufeinanderfolgenden Zeitpunkten gemessenen Koordinaten der Überwachungs- und der Referenzziele an das Überwachungszentrum zu übertragen.

5. Überwachungssystem nach Anspruch 4, **dadurch gekennzeichnet, daß** die Verarbeitungsmittel Mittel umfassen, um für jeden Meßzeitpunkt auf alle durch die Gesamtheit der Stationen gemessenen Koordinaten der Referenzziele und der Überwachungsziele einen mathematischen Algorithmus anzuwenden.

6. Überwachungssystem nach Anspruch 5, **dadurch gekennzeichnet, daß** der mathematische Algorithmus eine Methode der kleinsten Fehlerquadrate ist, um für jeden Meßzeitpunkt die absolute räumliche Position der Überwachungsziele zu berechnen, und daß die Verarbeitungsmittel ferner Mittel umfassen, um die absolute Position eines jeden Überwachungsziels zu den aufeinanderfolgenden Meßzeitpunkten zu vergleichen.

7. Überwachungssystem nach einem der Ansprüche 1 bis 6, **dadurch gekennzeichnet, daß** wenigstens eines der zwei Stationen zugeordneten Überwachungsziele aus zwei Zielelementen besteht, die an einem Bauwerksteil derart angebracht sind, daß ihr gegenseitiger Abstand fest ist, wobei eine der beiden Stationen die Koordinaten von einem der Überwachungszielelemente mißt, während die andere Station die Koordinaten des anderen Überwachungszielelementes mißt.

8. Überwachungssystem nach einem der Ansprüche 1 bis 7, **dadurch gekennzeichnet, daß** die Koordinaten Polarkoordinaten sind.

9. Überwachungssystem nach einem der Ansprüche 1 bis 8, **dadurch gekennzeichnet, daß** die Verarbeitungsmittel außerdem folgendes umfassen, nämlich Mittel, um die eventuellen Referenzziele oder die eventuellen Überwachungsziele zu identifizieren, die mittels der Methode der kleinsten Fehlerquadrate erhaltenen Residuen entsprechen, die größer als diejenigen der anderen Ziele sind, sowie Mittel, um die Messungen, welche die identifizierten Ziele berücksichtigen, außer Betracht zu lassen.

10. Verfahren zur Echtzeitüberwachung eventueller Bewegungen von Bauwerksteilen, bei welchem:
- man ein Überwachungssystem nach einem der Ansprüche 1 bis 9 bereitstellt, wobei in dem Verfahren:
- die Meßstationen zu jedem Meßzeitpunkt gesteuert werden, um die relativen Polarkoordinaten der Referenzziele und der Überwachungsziele, die ihnen zugeordnet sind, zu messen,
- man ausgehend von der Gesamtheit der erhaltenen Meßdaten einen Berechnungsschritt durchführt, vorzugsweise mittels eines Algorithmus des Typs der kleinsten Fehlerquadrate, um die absoluten Koordinaten der verschiedenen Überwachungsziele zu erhalten,
- man die erhaltenen absoluten Koordinaten mit einem Referenzzustand vergleicht, um eine eventuelle Bewegung eines der Überwachungsziele zu erkennen, und
- man einen Alarm auslöst, falls eine Bewegung erkannt wird.

11. Verarbeitungseinheit, umfassend ein Programm zur Ausführung des Verfahrens nach Anspruch 10.
